# EUROPEAN PATENT SPECIFICATION

(11) **EP 2 479 826 B1**
(45) Date of publication and mention of the grant of the patent: **25.03.2015**
(21) Application number: 12151862.5
(22) Date of filing: 20.01.2012
(51) Int. Cl.: H01M 8/06, H01M 8/04, C01B 3/38

(54) **Fuel cell system**
Brennstoffzellensystem
Système de pile à combustible

(30) Priority: 21.01.2011 JP 2011011037
(43) Date of publication of application: 25.07.2012
(73) Proprietor: Aisin Seiki Kabushiki Kaisha, Aichi 448-8650 (JP); TOYOTA JIDOSHA KABUSHIKI KAISHA, Toyota-shi, Aichi-ken, 471-8571 (JP)
(72) Inventor: YABUTANI, Motohiko, Kariya-shi, Aichi 448-8650 (JP)
(74) Representative: TBK

(56) References cited:
- US-A1- 2005 110 446
- US-A1- 2005 129 996
- US-B1- 6 432 568

## Description

### TECHNICAL FIELD

This disclosure generally relates to a fuel cell system.

### BACKGROUND DISCUSSION

JP2003-282105A (hereinafter referred to as Reference 1) discloses a known fuel cell system that restrains a freezing of a conduit in the fuel cell system by flowing warm circulation water from a hot water storage tank to the vicinity of the conduit in a case where the conduit is considered to be possibly freezing. JP2008-243590A (hereinafter referred to as Reference 2) discloses a fuel cell system that restrains the freezing of a reforming water conduit by increasing a temperature of reforming water. Specifically, in a case where the reforming water conduit is considered to be possibly freezing during an operation of the fuel cell system, warm circulation water is supplied from a hot water storage tank to a water tank via a water treatment unit to thereby increase the temperature of the reforming water. JP2005-259494A (hereinafter referred to as Reference 3) discloses a fuel cell system that restrains the freezing of a conduit by increasing a temperature within a housing. Specifically, in a case where the temperature within the fuel cell system is low, an anti-freezing heater and a ventilation fan are operated within the fuel cell system to thereby increase the temperature within the housing.

According to the fuel cell system disclosed in Reference 1, a heat capacity of hot water stored in the hot water storage tank is excessively used, which may result in a decrease of exhaust heat recovery efficiency in the hot water storage tank. According to the fuel cell system disclosed in Reference 2, the warm water in the hot water storage tank is introduced to the water tank, which may also result In the decrease of exhaust heat recovery efficiency in the hot water storage tank. In addition, a lifetime of a water refinement unit storing the reforming water may be reduced. Further, while the operation of the fuel cell system is being stopped, the freezing of the reforming water conduit is not restrained. The fuel cell system disclosed in Reference 3 increases the temperature within the housing, however, prevention of the freezing of the conduit is not enough. Still further, document US 2005/110446 A1 discloses a starting system for a pump, which includes a driving motor, an electric source, a selector switch, a starter sensor, a temperature sensor and a control unit. The selector switch is located between the driving motor and the electric source for reversing polarity of the electric power supplied from the electric source to the driving motor. The starter sensor senses whether or not the driving motor has been started. The temperature sensor senses a temperature. The control unit operates the selector switch so as to repeatedly give the driving motor indications of reverse rotation and normal rotation in a case where the starter sensor does not sense that the driving motor has been started even if the control unit operates the selector switch so as to give the driving motor the indication of normal rotation in a state where the temperature sensed by the temperature sensor is below a preset temperature.

A need thus exists for a fuel cell system that inhibits a freezing of a water supply passage connecting an evaporating portion and a tank for storing water serving as a material of water vapor for reforming in a wintertime or in a cold environment, for example.

### SUMMARY

According to an aspect of this disclosure, a fuel cell system comprises a fuel cell generating an electric power by being supplied with an anode fluid and a cathode fluid, an evaporating portion evaporating water to generate a water vapor and including an inlet port, a reforming portion forming the anode fluid by reforming a fuel by using the water vapor generated at the evaporating portion, a tank storing the water supplied to the evaporating portion, a heating portion heating the water supplied to the tank or stored in the tank, a water supply passage connecting the tank and the evaporating portion and allowing the water in the tank to be supplied to the evaporating portion, a water supply source provided at the water supply passage and being switchable between a normal mode in which the water in the tank is sent to the inlet port of the evaporating portion by a first rotation where the water supply source rotates in a predetermined direction, and a reverse mode in which the water in the water supply passage is returned to the tank by a second rotation where the water supply source rotates in a direction different from the predetermined direction, and a control portion controlling the water supply source. The control portion controls the water supply source to be switched to the reverse mode so as to return the water in the water supply passage to the tank before a power generating operation is stopped, the control portion performing a freeze restraining process by controlling the water supply source to alternately operate in the normal mode and the reverse mode in a case where the control portion determines a possibility of a freezing or a start of the freezing of at least one of the water supply passage and the water supply source.

Accordingly, in a case where the possibility of the freezing exists or the freezing is started at at least one of the water supply passage and the water supply source in wintertime, in a cold environment, or the like, the water in a liquid phase in the tank that is maintained at a temperature greater than a freezing point flows in the water supply passage in a reciprocating manner. As a result, the freezing of the water supply passage is restrained. The fuel cell system may be thus easily started to operate in the wintertime, in the cold environment, or the like.

The control portion performs a return process returning the water in the water supply passage to the tank so that the water is eliminated from the water supply passage by driving the water supply source in the reverse mode at a start of the freeze restraining process.

Accordingly, because the water in the water supply passage is eliminated, a basic state of the water supply passage (i.e., a state where the water supply passage is empty) is ensured. At this time, a length and a volume of the water supply passage in addition to a water supply volume of the water supply source per time unit are known. Thus, the total volume of water supplied to the water supply passage from the basic state is obtained. As a result, the water level of the water supplied to the water supply passage is obtained and further a region in the water supply passage for which the freeze retraining process is performed is obtained.

The fuel cell system further includes a first sensor detecting an ambient temperature of the fuel cell system, wherein the control portion drives the water supply source in the reverse mode to reduce or eliminate the water in the water supply passage and to return the water to the tank in a case where a temperature detected by the first sensor is equal to or smaller than a first threshold value, and wherein the control portion determines the possibility of the freezing and performs the freeze restraining process in a case where the temperature detected by the first sensor is equal to or smaller than a second threshold value being different from the first threshold value.

Accordingly, the control portion appropriately performs the freeze restraining process.

The first threshold value is equal to or smaller than 5°C and the second threshold value is smaller than the first threshold value.

Accordingly, the control portion 100 appropriately performs the freeze restraining process.

The fuel cell system further includes a second sensor detecting a presence of water in a passage portion arranged between the evaporating portion and the water supply source in the water supply passage, wherein the control portion controls the water supply source to stop operating in the normal mode based on a signal from the second sensor in the freeze restraining process.

Accordingly, at the time where the second sensor detects the presence of water, the water is supplied up to a point on the water supply passage away from the inlet port by a predetermined distance. Thus, the control portion stops the water supply source that is driven in the normal mode to thereby restrain the water from entering the evaporating portion 2.

The control portion drives the water supply source alternately and repeatedly in the normal mode and the reverse mode and continuously or stepwisely increases a heating value of the heating portion per time unit in association with the number of times the normal mode is performed in a case where the control portion determines the freezing of the water supply passage.

Accordingly, because the water in the tank is heated in association with the increase of the number of times the water supply source is driven in the normal mode, the freezing may be effectively eliminated.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram schematically illustrating a fuel cell system according to first to ninth embodiments disclosed here;

Fig. 2 is a flowchart of a freeze restraining process performed by a control portion according to the fifth embodiment disclosed here;

Fig. 3 is a flowchart of a normal mode of the freeze restraining process performed by the control portion according the sixth embodiment disclosed here; and

Fig. 4 is a flowchart of the normal mode of the freeze restraining process performed by the control portion according the seventh embodiment disclosed here.

### DETAILED DESCRIPTION

### [First embodiment]

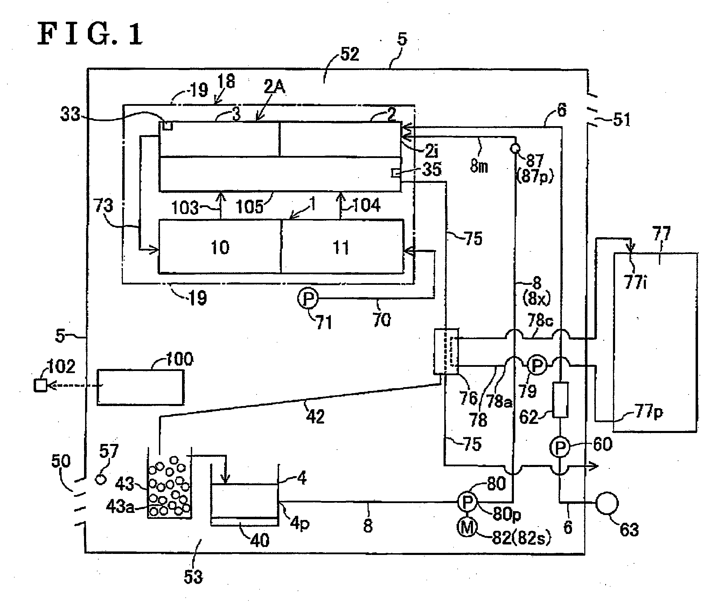

A first embodiment will be explained with reference to Fig. 1. As illustrated in Fig. 1, a fuel cell system includes a fuel cell 1, an evaporating portion 2 evaporating water in a liquid phase so as to generate water vapor, a reforming portion 3 reforming fuel by using the water vapor generated at the evaporating portion 2 so as to form anode fluid, a tank 4 storing the water supplied to the evaporating portion 2, and a case 5 accommodating the fuel cell 1, the evaporating portion 2, the reforming portion 3, and the tank 4. The fuel cell 1 includes an anode 10 and a cathode 11 sandwiching therein an ionic conductor. For example, a solid oxide fuel cell (SOFC; an operation temperature is equal to or greater than 400 °C, for example) is applicable to the fuel cell 1. The reforming portion 3 is formed by a carrier such as ceramics on which a reforming catalyst is carried. The reforming portion 3 is arranged next to the evaporating portion 2 while including a temperature sensor 33. The reforming portion 3 and the evaporating portion 2 constitute a reformer 2A. The reformer 2A and the fuel cell 1 are surrounded by an insulated wall 19 to thereby form a power generation module 18. In addition, a combusting portion 105 having an ignition portion 35 is provided between the reforming portion 3, the evaporating portion 2, and the fuel cell 1.

In a power generating operation of the fuel cell system (the fuel cell 1), the reformer 2A is heated up within the insulated wall 19 so as to be suitable for a reforming reaction. In the power generating operation, the evaporating portion 2 is heated up so as to heat the water to obtain the water vapor. In a case where the fuel cell 1 is the SOFC, an anode exhaust gas discharged from the anode 10 via a first fluid passage 103 and a cathode exhaust gas discharged from the cathode 11 via a second fluid passage 104 are burnt at the combusting portion 105. As a result, the reforming portion 3 and the evaporating portion 2 are heated up at the same time.

A fuel passage 6 through which the fuel from a fuel source 63 is supplied to the reformer 2A includes a fuel pump 60 and a desulfurizer 62. A cathode fluid passage 70 is connected to the cathode 11 of the fuel cell 1 so as to supply a cathode fluid (air) to the cathode 11. A cathode pump 71 is provided at the cathode fluid passage 70 so as to function as a supply source transmitting the cathode fluid.

As illustrated in Fig. 1, the case 5 includes an intake port 50 and an exhaust port 51 connected to an outside air. Further, the case 5 includes an upper void 52 provided at an upper side of the case 5 and serving as a first chamber, and a lower void 53 provided at a lower side of the case 5 and serving as a second chamber. The fuel cell 1, the reforming portion 3, and the evaporating portion 2 are accommodated in the upper void 52. The tank 4 storing the water that is reformed at the reforming portion 3 is accommodated in the lower void 53. A heating portion 40 such as an electric heater having a heating function is provided at the tank 4. The heating portion 40 formed by the electric heater, for example, heats up the water stored in the tank 4. In a case where an ambient temperature such as an outside air temperature is low, the water in the tank 4 is heated up to or above a predetermined temperature (for example, 5 °C, 10 °C, or 20 °C) by the heating portion 40 based on a command from a control portion 100 to thereby avoid freezing. The water level in the tank 4 may be desirably basically constant.

As illustrated in Fig. 1, a water supply passage 8 serving as a conduit is provided within the case 6 so as to connect an outlet port 4p of the tank 4 in the lower void 53 to an inlet port 2i of the evaporating portion 2 in the upper void 52. Because the tank 4 is arranged at a lower side of the evaporating portion 2 within the case 5 as illustrated in Fig. 1, the water supply passage 8 basically substantially extends in a vertical direction. According to the first embodiment, a heating portion is not provided at the water supply passage 8 because the freezing of the water supply passage 8 is inhibited by means of a freeze restraining process.

The water supply passage 8 is a passage through which the water stored in the tank 4 is supplied from the outlet port 4p of the tank 4 to the inlet port 2i of the evaporating portion 2. A pump 80 functioning as a water supply source is provided at the water supply passage 8 so as to send the water in the tank 4 to the evaporating portion 2. A known gear pump having a sealability, for example, is applicable to the pump 80. The pump 80 is driven by an electric motor 82. Because the pump 80 has a high water sealing ability, even when the water is present at a downstream side relative to a discharge port 80p of the pump 80 in the water supply passage 8, the water is basically restrained from leaking to an upstream side of the pump 80 for a long time period. Thus, in a case where the power generating operation of the fuel cell system is stopped, the water is likely to be stored at a downstream passage portion 8x arranged at the downstream side relative to the discharge port 80p of the pump 80 in the water supply passage 8. Such water may be freezing in wintertime, in a cold environment, or the like. The water supply passage 8 is connected to the outside air via the evaporating portion 2, the reforming portion 3, and the fuel cell 1.

According to the present embodiment, the motor 82 driving the pump 80 rotates in both forward and reverse directions. Specifically, the motor 82 is switchable between a normal mode where the motor 82 rotates in the forward direction so as to send the water in the tank 4 from the outlet port 4p to the inlet port 2i of the evaporating portion 2, and a reverse mode where the motor 82 rotates in the reverse direction so as to return the water in the water supply passage 8 via the outlet port 4p to the tank 4. That is, the pump 80 driven by the motor 82 is switchable between the normal mode to send the water in the tank 4 to the evaporating portion 2 by a first rotation where the pump 80 rotates in a predetermined direction and the reverse mode to return the water in the water supply passage 8 to the tank 4 by a second rotation where the pump 80 rotates in a direction different from the predetermined direction. The control portion 100 controls the motor 82 by means of a drive circuit. Any motor that rotates in the forward and reverse directions is applicable to the motor 82. For example, a stepping motor is desirable as the motor 82. The control portion 100 controls the pump 80 via the motor 82. Further, the control portion 100 controls the cathode pump 71, a hot water storage pump 79 (to be explained later), and the fuel pump 60 via respective motors driving the pumps 71, 79, and 60.

In a case where the fuel pump 60 is driven at the start of the fuel cell system, the fuel flows through the fuel passage 6 to the evaporating portion 2, the reforming portion 3, an anode fluid passage 73, the anode 10 of the fuel cell 1, the first fluid passage 103, and the combusting portion 105. In addition, the cathode fluid (air) flows from the cathode pump 71 to the cathode fluid passage 70, the cathode 11 of the fuel cell 1, the second fluid passage 104, and the combusting portion 105. When the ignition portion 35 is ignited in the aforementioned state, the combustion occurs at the combusting portion 105 so as to heat up the reforming portion 3 and the evaporating portion 2. In a case where the pump 80 is driven in the normal mode while the reforming portion 3 and the evaporating portion 2 are heated up, the water in the tank 4 is sent from the outlet port 4p to the inlet port 2i of the evaporating portion 2 through the water supply passage 8. The water is then heated at the evaporating portion 2 to form the water vapor. The water vapor moves to the reforming portion 3 together with the fuel supplied from the fuel passage 6. At this time, the gaseous fuel is desirable; however, the liquid fuel may be acceptable in some cases. The fuel in the reforming portion 3 is reformed by the water vapor so as to form the anode fluid (a hydrogen containing gas). The anode fluid is supplied to the anode 10 of the fuel cell 1 via the anode fluid passage 73. Further, the cathode fluid (an oxygen containing gas, i.e., air in the case 5) is supplied to the cathode 11 of the fuel cell 1 via the cathode fluid passage 70. As a result, the fuel cell 1 generates an electric power. Anode off-gas discharged from the anode 10 and cathode off-gas discharged from the cathode 11 flow through the first and second fluid passages 103 and 104 respectively and reach the combusting portion 105 so as to be burnt at the combusting portion 105. The resulting exhaust gas at a high temperature is emitted to the outside of the case 5 via an exhaust gas passage 75.

A heat exchanger 76 having a condensation function is provided at the exhaust gas passage 75. A hot water storage passage 78 connected to a hot water storage tank 77 is connected to the heat exchanger 76. The hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage tank 79 so as to flow through the outward passage 78a and is heated at the heat exchanger 76. The water heated by the heat exchanger 76 is returned to the hot water storage tank 77 from a return port 77i by flowing through the inward passage 78c. Accordingly, the hot water is obtained at the hot water storage tank 77. The water vapor included in the aforementioned exhaust gas from the fuel cell 1 is condensed at the heat exchanger 76 to form condensed water. The condensed water is supplied to a purification portion 43 because of the effect of gravity, for example, via a condensation water passage 42 extending from the heat exchanger 76. Because the purification portion 43 includes a water purifier 43a such as an ion-exchange resin, an impure substance contained in the condensed water is removed. The water where the impure substance is removed moves to the tank 4 and is stored thereat. When the pump 80 is driven in the normal mode, the water in the tank 4 is supplied to the evaporating portion 2 at the high temperature via the water supply passage 8 and is then supplied to the reforming portion 3 after the water turns to the water vapor at the evaporating portion 2. The water (water vapor) is consumed at the reforming portion 3 in the reforming reaction for reforming the fuel.

In a case where the ambient temperature such as the outside air temperature decreases in the wintertime, in the cold environment, or the like, the freezing may occur at at least one of the water supply passage 8 and the pump 80 while the power generating operation of the fuel cell system is being stopped. In such case, the freeze restraining process is performed so as to drive the pump 80 alternately in the normal mode and the reverse mode. In a case where the motor 82 is driven in the normal mode so as to rotate in the forward direction, the pump 80 is driven in the normal mode so that the water in the tank 4 is sent towards the inlet port 2i of the evaporating portion 2 in the water supply passage 8. Generally, the water is desirably sent to the vicinity of the inlet port 2i (i,e., to a point on the water supply passage 8 away from the inlet port 2i by a predetermined distance) of the evaporating portion 2 so as not to enter the inlet port 2i. Specifically, in a state where an overall length of the water supply passage 8 extending from the outlet port 4p of the tank 4 to the inlet port 2i of the evaporating portion 2 is defined to be 100, the aforementioned predetermined distance is indicated by a value in a range from 0.5 to 10 from the inlet port 2i of the evaporating portion 2 towards the tank 4.

On the other hand, in a case where the motor 82 is driven in the reverse mode so as to rotate in the reverse direction, the pump 80 is driven in the reverse mode so that the water in the water supply passage 8 is returned to the tank 4. As a result, the warm water (for example, of which temperature is higher than 2 °C) in the tank 4 that is heated by the heating portion 40 flows and moves in a reciprocating manner in the water supply passage 8. The control portion 100 thereby performs the freeze restraining process on the water supply passage 8 and the pump 80 so as to inhibit the freezing thereof. The water supply passage 8 does not need to include the heating portion for inhibiting the freezing, which results In a decrease of the number of components and a cost reduction of the fuel cell system. Depending on the state of the water in the water supply passage 8, the motor 82 may be driven from the normal mode to the reverse mode, or from the reverse mode to the normal mode. Specifically, in a case where a large amount of water is stored in the water supply passage 6, the motor 82 is first driven in the normal mode, then in the reverse mode, the normal mode, the reverse mode, and the like. In a case where a small amount of water is stored in the water supply passage 8, the motor 82 is first driven in the reverse mode, then in the normal mode, the reverse mode, the normal mode, and the like, or first driven in the normal mode, then in the reverse mode, the normal mode, the reverse mode, and the like. In a case where no water is stored in the water supply passage 8, the motor 82 is first driven in the normal mode, then in the reverse mode, the normal mode, the reverse mode, and the like.

In a case where the motor 82 is driven in the reverse mode, the water remaining in the water supply passage 8 is returned to the tank 4. That is, the control portion 100 performs a return process. Thus, grit or dust that may be present at the water supply passage 8 is accumulated on a bottom portion of the tank 4. The grit or dust is restrained from being supplied to the reforming portion 3, which protects the reforming catalyst of the reforming portion 3, for example. Further, in a case where the fuel cell system is stopped for a long time period, for example, quality of the water remaining in the water supply passage 8 may deteriorate. In such case, the water in the water supply passage 8 is returned to the tank 4 by the reverse mode of the motor 82 so as to be diluted by the water (pure water or condensed water) in the tank 4. The reforming catalyst of the reforming portion 3 is further protected accordingly.

According to the present embodiment, a temperature sensor 57 serving as a first sensor and detecting the ambient temperature (generally, the outside air temperature) is provided. The temperature sensor 57 is provided in the vicinity of the inlet port 50 in the lower void 53 of the case 5. Alternatively, the temperature sensor 57 may be provided at an outside of the case 5. A signal detected by the temperature sensor 57 is input to the control portion 100. Thus, the control portion 100 determines whether or not the freezing is likely to occur or the freezing is started at at least one of the water supply passage 8 and the pump 80 based on the signal from the temperature sensor 57. In a case where the ambient temperature detected by the temperature sensor 57 increases so that the possibility of the freezing is eliminated, the control portion 100 stops the freeze restraining process. In this case, the motor 82 desirably ends rotating in the reverse mode so that no water remains in the water supply passage 8, which is against the possibility of another decrease of the ambient temperature.

### [Second embodiment]

A second embodiment basically includes the same configuration and effect as those of the first embodiment. Therefore, the second embodiment will be explained with reference to Fig. 1. According to the second embodiment, a stepping motor rotatable in the forward and reverse directions, a DC motor rotatable in the forward and reverse directions, or the like is used as the motor 82 to drive the pump 80. In the case of finishing the power generating operation of the fuel cell system, the control portion 100 drives the motor 82 to rotate in the reverse direction to thereby achieve the reverse mode of the pump 80. In the reverse mode of the pump 80, the water remaining in the water supply passage 8 flows backward in the water supply passage 8 towards the tank 4 so as to be returned to the tank 4. The control portion 100 desirably keeps driving the pump 80 in the reverse mode until the water is eliminated from the water supply passage 8 and the water supply passage 8 becomes empty. In this case, the water is also eliminated from the pump 80 (i.e., the pump 80 is empty). Therefore, even in a case where the water supply passage 8 may possibly freeze in the wintertime, in the cold environment, or the like, the possibility of freezing of the water supply passage 8 and the pump 80 is eliminated from the end of the power generating operation of the fuel cell system to the restart thereof.

In addition, in a case where the power generating operation of the fuel cell system is stopped for a long time period, the control portion 100 drives the motor 82 to rotate in the reverse direction so as to obtain the reverse mode of the pump 80 immediately before the power generating operation is stopped. In the reverse mode of the pump 80, the water remaining in the water supply passage 8 flows backward in the water supply passage 8 so as to be returned to the tank 4. As a result, the water in the water supply passage 8 is eliminated while the water in the pump 80 is also eliminated. Therefore, even in a case where a time period from the end of the power generating operation to the restart thereof is long in the wintertime, in the cold environment, or the like, the possibility of freezing of the water supply passage 8 and the pump 80 is eliminated.

In a case where the power generating operation of the fuel cell system is stopped in the wintertime, in the cold environment, or the like, the freezing may occur at at least one of the water supply passage 8 and the pump 80. In such case, in a state where the water in the tank 4 is heated by the heating portion 40, the control portion 100 performs the freeze restraining process to thereby alternately drive the pump 80 in the normal mode and the reverse mode. As mentioned above, in a case where the pump 80 is driven in the normal mode, the water in the tank 4 is sent to the point on the water supply passage 8 away from the inlet port 2i by the predetermined distance. In a case where the pump 80 is driven In the reverse mode, the water remaining in the water supply passage 8 flows backwards in the water supply passage 8 to be returned to the tank 4. In a state where the fuel cell system is stopped during nighttime, for example and the freezing may occur at the water supply passage 8, the freeze restraining process is performed so that the warm water (for example, equal to or greater than 5°C, 10°C, or 20°C) heated by the heating portion 40 in the tank 4 moves in a reciprocating manner in the water supply passage 8. As a result, the freezing of the water supply passage 8 and the pump 80 is restrained.

### [Third embodiment]

A third embodiment basically includes the same configuration and effect as those of the first embodiment. Therefore, the third embodiment will be explained with reference to Fig. 1. According to the third embodiment, a stepping motor 82s rotatable in the forward and reverse directions is used as the motor to drive the pump 80. In a case where the power generating operation of the fuel cell system is stopped in the wintertime, in the cold environment, or the like, and the freezing may occur at at least one of the water supply passage 8 and the pump 80, the control portion 100 performs the freeze restraining process as mentioned above. At a start of the freeze restraining process, the stepping motor 82s is driven in the reverse mode for a first predetermined time tc or shorter, thereby operating the pump 80 in the reverse mode. The water remaining in the water supply passage 8 is thus eliminated so that the water is fully returned to the tank 4 via the outlet port 4p. In this case, the water supply passage 8 is maintained at an atmospheric pressure.

Afterwards, the control portion 100 drives the stepping motor 82s in the normal mode so as to operate the pump 80 in the normal mode for a second predetermined time ta. In the normal mode of the pump 80, the warm water in the tank 4 heated by the heating portion 40 flows from the outlet port 4p of the tank 4 to the evaporating portion 2 through the water supply passage 8. Then, the water is sent to the point on the water supply passage 8 away from the inlet port 2i by the predetermined distance.

At this time, in a state where the overall length of the water supply passage 8 extending from the outlet port 4p of the tank 4 to the inlet port 2i of the evaporating portion 2 is defined to be 100, the aforementioned predetermined distance is indicated by a value in a range from 0.5 to 20 from the inlet port 2i of the evaporating portion 2 towards the tank 4. For example, the aforementioned predetermined distance is indicated by a value in a range from 0.5 to 10. The heating portion such as a heater is not provided at the water supply passage 8. Thus, the heat of the water in the water supply passage 8 is transmitted to the water supply passage 8, which results in a gradual decrease of the temperature of the water in the water supply passage 8. Therefore, the temperature of the water desirably increases again.

Then, the control portion 100 thereafter drives the pump 80 in the reverse mode for the first predetermined time tc. In the reverse mode of the pump 80, the water in the water supply passage 8 is fully returned to the tank 4 and is reheated by the heating portion 40 or is mixed with the warm water in the tank 4. As a result, the temperature of the water in the tank 4 again increases. In this case, the water in the water supply passage 8 is eliminated to thereby restrain the possible freezing of the water remaining in the water supply passage.

According to the third embodiment, the control portion 100 drives the pump 80 in the reverse mode at the start of the freeze restraining process to thereby eliminate the water in the water supply passage 8. Then, the control portion 100 alternately drives the pump 80 in the normal mode (for the second predetermined time ta) and the reverse mode (for the first predetermined time tc). As a result, the warm water of which temperature is greater than a freezing point (for example, 5°C or more) and which is heated by the heating portion 40 in the tank 4 flows through the water supply passage 8 in a reciprocating manner relative to the evaporating portion 2. Accordingly, the control portion 100 performs the freeze restraining process to restrain the freezing of the water supply passage 8 and the pump 80. At this time, a heating value of the heating portion 40 per time unit desirably increases in association with a decrease of the ambient temperature such as the outside air temperature. In a state where the pump 80 is driven in the normal mode, the control portion 100 drives the pump 80 to be changed to the reverse mode from the normal mode based on the drive time of the pump 80 or a drive amount of the pump 80. At this time, the water in the tank 4 is inhibited from being excessively supplied to the water supply passage 8 and is inhibited from entering the evaporating portion 2. The drive time and the drive amount of the pump 80 basically correspond to the volume of water supplied to the water supply passage 8 from the tank 4. Thus, the water level of water supplied to the water supply passage 8 from a basic state (i.e., a state where no water is present in the water supply passage 8) is obtainable. Further, a region in the water supply passage 8 where the freeze retraining process is performed is obtainable.

### [Fourth embodiment]

A fourth embodiment basically includes the same configuration and effect as those of the first embodiment. Therefore, the fourth embodiment will be explained with reference to Fig. 1. At the start of the freeze restraining process, the control portion 100 desirably drives the stepping motor 82s to rotate in the reverse direction in the reverse mode so as to operate the pump 80 in the reverse mode. The water remaining in the water supply passage 8 is thus returned to the tank 4 via the outlet port 4p so as to be eliminated from the water supply passage 8. In this case, the control portion 100 supplies to the stepping motor 82s a drive pulse for the reverse rotation having a total number of pulses for the reverse mode (i.e., a total reverse pulse number Nc). Accordingly, the water remaining in the water supply passage 8 is basically fully returned to the tank 4 and is heated again in the tank 4. Because the water in the water supply passage 8 and the pump 80 is eliminated, i.e., the water supply passage 8 and the pump 80 both become empty, the freezing of the water supply passage 8 and the pump 80 is restrained. At this time, a length and a volume of the water supply passage 8 are known. Therefore, the total reverse pulse number Nc is basically specified so that the water supplied to the point on the water supply passage 8 away from the inlet port 2i by the predetermined distance in the water supply passage 8 is fully returned to the tank 4 by the supply of the total reverse pulse number Nc to the stepping motor 82s.

After the water in the water supply passage 8 is eliminated as mentioned above, the control portion 100 drives the motor 82 in the normal mode. At this time, the control portion 100 supplies to the stepping motor 82s a drive pulse for the forward rotation having a total number of pulses for the normal mode (i.e., a total normal pulse number Na). In the normal mode of the pump 80, the stepping motor 82s rotates by a degree corresponding to the total normal pulse number Na in the forward direction and further the pump 80 is driven in the normal mode. The total normal pulse number Na supplied to the stepping motor 82s basically corresponds to the volume of water sent to the point on the water supply passage 8 away from the inlet port 2i by the predetermined distance by the pump 80 from a state where no water is present in the water supply passage 8 (the basic state). In this case, because the length and the volume of the water supply passage 8 are known, the total normal pulse number Na is basically specified so that the water is supplied to the point on the water supply passage 8 away from the inlet port 2i by the predetermined distance by the supply of the total normal pulse number Na to the stepping motor 82s from the state where no water is present in the water supply passage 8.

Accordingly, in a case where the stepping motor 82s and the pump 80 are each driven in the normal mode, the warm water in the tank 4 heated by the heating portion 40 flows through the water supply passage 8 from the outlet port 4p of the tank 4 to the evaporating portion 2 so as to be supplied to the point on the water supply passage 8 away from the inlet port 2i by the predetermined distance. As a result, the water is inhibited from entering the evaporating portion 2 in the freeze restraining process. Because the heating portion is not provided at the water supply passage 8, the water temperature in the water supply passage 8 gradually decreases. The aforementioned total normal pulse number Na is equal to or substantially equal to the aforementioned total reverse pulse number Nc. However, the relationship between the total normal pulse number Na and the total reverse pulse number Nc is not limited to the above.

After the normal mode of the pump 80 is conducted, the control portion 100 drives the stepping motor 82s and the pump 80 in the reverse mode as long as the possibility of the freezing exists. In this case, the control portion 100 supplies the drive pulse for the reverse rotation having the total reverse pulse number Nc to the stepping motor 82s. In the reverse mode, the water in the water supply passage 8 is basically fully returned to the tank 4 and is reheated by the heating portion 40. In this case, the water supply passage 8 becomes empty and basically turns to the atmospheric pressure.

According to the fourth embodiment, the control portion 100 also drives the pump 80 in the reverse mode at the start of the freeze restraining process. Then, the control portion 100 alternately drives the pump 80 in the normal mode (the total normal pulse number Na) and the reverse mode (the total reverse pulse number Nc). Thereafter, the warm water (having the higher temperature than 2°C, for example) heated by the heating portion 40 flows through the water supply passage 8 in the reciprocating manner relative to the evaporating portion 2. The control portion 100 thus performs the freeze restraining process to thereby restrain the freezing of the water supply passage 8 and the pump 80. The heating value of the heating portion 40 per time unit desirably increases in association with the decrease of the ambient temperature such as the outside air temperature.

### [Fifth embodiment]

A fifth embodiment basically includes the same configuration and effect as those of the first embodiment. Therefore, the fifth embodiment will be explained with reference to Fig. 1. As mentioned above, the temperature sensor 57 is provided in the vicinity of the intake port 50 so as to detect the ambient temperature (the outside air temperature). In a state where the power generating operation of the fuel cell system is stopped, the control portion 100 determines that the freezing may possibly occur when a detection temperature T of the temperature sensor 57 is equal to or smaller than a first threshold value T1 (T1≤5°C; T1 is determined by considering the freezing) and is higher than a second threshold value (T2<T1). Then, the control portion 100 prioritizes the reverse mode where the water is returned to the tank 4 than the normal mode where the water is supplied to the water supply passage 8. That is, the control portion 100 drives the motor 82 and the pump 80 in the reverse mode to thereby return the water in the water supply passage 8 to the tank 4 so as to reduce or eliminate the water in the water supply passage 8. In this case, the control portion 100 does not yet control the warm water in the tank 4 to flow in the reciprocating manner in the water supply passage 8. That is, the normal mode and the reverse mode are not yet alternately repeated multiple times, which results in a reduction in consumption energy of the pump 80. At this time, the heating portion 40 of the tank 4 may be either turned on or off. When the heating portion 40 is in the off state, the heating value of the heating portion 40 is restrained. The aforementioned first threshold value T1 corresponds to a temperature at which the possibility of the freezing of the water supply passage 8 and the pump 80 in the case 5 is not high. While the place where the fuel cell system is installed such as a windy place is being considered, T1 is specified to be equal to 1°C, 3°C or 5°C, for example, but not limited to such values. In a case where the fuel cell system is installed in the windy place, the first threshold value T1 may be small. The ambient temperature may be a temperature of a place where the fuel cell system is installed or an inner temperature of the case 5 of the fuel cell system (for example, at the intake port 50 of the case 5).

In a case where the detection temperature T of the temperature sensor 57 is equal to or smaller than the second threshold value T2 (T2<T1≤2°C), the control portion 100 determines that the freezing may highly possibly occur. In this case, the control portion 100 controls the stepping motor 82s to be alternately driven in the normal mode and the reverse mode. That is, the pump 80 is alternately operated in the normal mode and the reverse mode to thereby perform the freeze restraining process. In this case, the control portion 100 also desirably prioritizes the reverse mode than the normal mode. As a result of the freeze restraining process, the warm water heated by the heating portion 40 flows through the water supply passage 8 in the reciprocating manner so as to restrain the freezing of the water supply passage 8 and the pump 80. The second threshold value T2 is equal to -2°C, -5°C, or -15°C, for example, but not limited to such values.

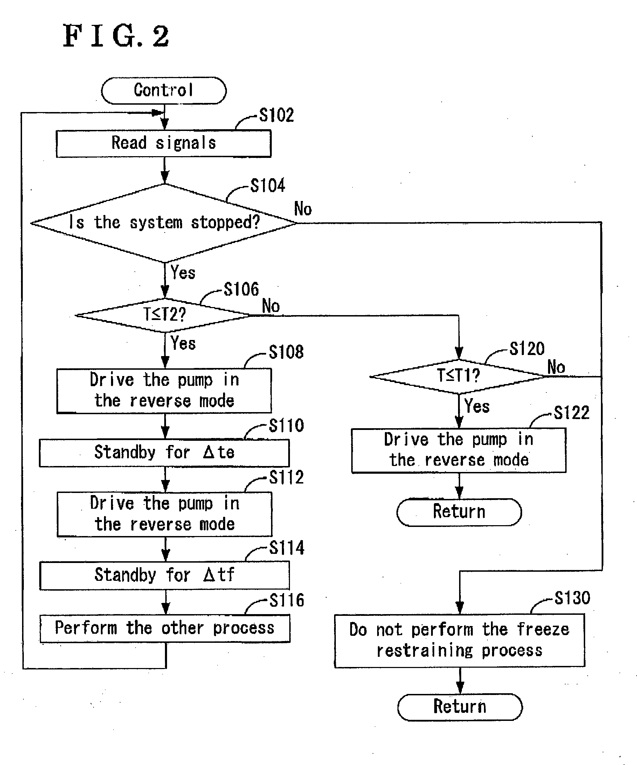

Fig. 2 is an example of a flow performed by a CPU of the control portion 100. First, the control portion 100 reads signals from various sensors and instruments such as the temperature sensor 57 in S102. In a case where the fuel cell system is presently operated (i.e., during the power generating operation or the startup operation) (No in S104), the possibility of the freezing of the water supply passage 8 does not exist and thus the freeze restraining process is not performed in S130.

On the other hand, in a case where the operation (the power generating operation or the startup operation) of the fuel cell system is stopped (Yes in S104), the possibility of the freezing occurs during the wintertime or in the cold environment, for example. Thus, the control portion 100 compares the detection temperature T detected by the temperature sensor 57 and the second threshold value T2 in S106. When the detection temperature T is equal to or smaller than the second threshold value T2 (for example, -2°C) (T≤T2, Yes in S106), the possibility of the freezing is high. Thus, the control portion 100 prioritizes the reverse mode than the normal mode so as to rotate the motor 82 in the reverse direction and to operate the pump 80 in the reverse mode for the first predetermined time tc in S108. The water in the water supply passage 8 is fully returned to the tank 4 accordingly. Afterwards, the control portion 100 waits for a time Δte while the pump 80 is being stopped in S110. The time Ate is desirably specified in consideration of a time period for changing the rotation direction of the motor 82 and/or a time period for heating the water that is returned to the tank 4 and is then mixed with the water stored in the tank 4 at the high temperature, for example.

Next, the control portion 100 drives the motor 82 to rotate in the forward direction so as to operate the pump 80 in the normal mode for the second predetermined time ta in S112. The control portion 100 thereafter stops the pump 80 and waits for a time Δtf In S114. The time Δtf is desirably specified in consideration of a time period for the heat of the warm water (of which temperature is desirably equal to or greater than 5°C) supplied to the water supply passage 8 to be transmitted to an inner wall surface of the water supply passage 8. The control portion 100 then performs the other process in S118 and returns to S102.

According to the fifth embodiment, in a case where the detection temperature T of the temperature sensor 57 is equal to or smaller than the first threshold value T1 and is higher than the second threshold value T2 (T2<T≤T1; Yes in S120), the possibility of the freezing is more than a little. Thus, the control portion 100 drives the motor 82 to rotate in the reverse direction so as to operate the pump 80 in the reverse mode in S108. As a result, the water in the water supply passage 8 is fully returned to the tank 4. On the other hand, in a case where the detection temperature T of the temperature sensor 57 is higher than the first threshold value T1 (for example, 2°C) (T>T1; No in S120), it is considered that the possibility of the freezing does not exist. Thus, the control portion 100 controls the heating portion 40 to be turned off so as not to perform the freeze restraining process in S130.

According to the fifth embodiment, in a case where the possibility of the freezing exists, the heating value of the heating portion 40 per time unit desirably increases in association with the decrease of the ambient temperature such as the outside air temperature. In addition, in association with the decrease of the ambient temperature, the time Δte and the time Δtf are relatively reduced as compared to a case where the ambient temperature is high so that a frequency of the reciprocation of the warm water in the tank 4 per time unit in the water supply passage 8 relatively increases.

### [Sixth embodiment]

A sixth embodiment basically includes the same configuration and effect as those of the first embodiment. Therefore, the sixth embodiment will be explained with reference to Fig. 1. According to the sixth embodiment, the stepping motor 82s is used as the motor. As illustrated in Fig. 1, a water sensor 87 serving as a second sensor is provided to detect the presence of the water in the passage portion 8x arranged between the inlet port 2i of the evaporating portion 2 and the discharge port 80p of the pump 80 in the water supply passage 8. Specifically, the water sensor 87 detects the presence of the water at the point on the water supply passage 8 away from the inlet port 2i by the predetermined distance. At the start of the freeze restraining process, the control portion 100 drives the stepping motor 82s to rotate in the reverse direction by the total reverse pulse number Nc in the reverse mode to thereby operate the pump 80 in the reverse mode. The water remaining in the water supply passage 8 is fully returned to the tank 4 via the outlet port 4p of the tank 4 so that the water is eliminated from the water supply passage 8. Any types of sensors are applicable to the water sensor 87 as long as the presence of water in the passage portion 8x is detectable. For example, a capacitive sensor, an electrical resistance sensor, a gravimetric sensor, or a water load sensor is applicable to the water sensor 87.

Thereafter, the control portion 100 drives the pump 80 in the normal mode. In this case, the control portion 100 supplies the drive pulse for the forward rotation having the total normal pulse number Na. The control portion 100 drives the stepping motor 82s in the forward direction by a degree corresponding to the total normal pulse number Na and further drives the pump 80 in the normal mode. The total normal pulse number Na in the normal mode basically corresponds to the volume of water sent to the evaporating portion 2 in the water supply passage 8 by the pump 80 from a state where no water is present in the water supply passage 8. In this case, the length and the volume of the water supply passage 8 are known. Thus, the total normal pulse number Na is basically specified so that the water is supplied to the point on the water supply passage 8 away from the Inlet port 2i by the predetermined distance by the supply of the total normal pulse number Na to the stepping motor 82s from the state where no water is present in the water supply passage 8. Accordingly, in a case where the stepping motor 82s and the pump 80 are driven in the normal mode, the warm water in the tank 4 heated by the heating portion 40 flows through the water supply passage 8 from the outlet port 4p of the tank 4 so as to be sent to the point on the water supply passage 8 away from the inlet port 2i by the predetermined distance.

Afterwards, the control portion 100 drives the stepping motor 82s to rotate in the reverse direction so as to operate the pump 80 in the reverse mode. In this case, the control portion 100 supplies the drive pulse for the reverse rotation having the total reverse pulse number Nc. In the reverse mode, the water in the water supply passage 8 is basically fully returned to the tank 4 and is reheated by the heating portion 40. In this case, the water in the water supply passage 8 is eliminated. The total reverse pulse number Nc basically corresponds to the volume of water in the water supply passage 8 to be returned to the tank 4. In this case, because the length and the volume of the water supply passage 8 are known as mentioned above, the total reverse pulse number Nc is basically specified so that the water supplied to the point on the water supply passage 8 away from the inlet port 2i by the predetermined distance is fully returned to the tank 4 by the supply of the total reverse pulse number No to the stepping motor 82s.

According to the sixth embodiment, the control portion 100 also prioritizes the reverse mode than the normal mode of the pump 80 at the start of the freeze restraining process. Then, the control portion 100 controls the pump 80 to be intermittently and alternately brought in the normal mode and the reverse mode. As a result, the warm water (of which temperature is higher than 2°C, for example) heated by the heating portion 40 in the tank 4 flows through the water supply passage 8 In the reciprocating manner relative to the evaporating portion 2. The control portion 100 thus performs the freeze restraining process to restrain the freezing of the water supply passage 8 and the pump 80.

Instead of the total normal pulse number Na in the normal mode, the second predetermined time ta during which the stepping motor 82s is driven in the normal mode may be used as a control parameter. The second predetermined time ta basically corresponds to a time period during which the water is sent towards the evaporating portion 2 so as to reach the height position of the water sensor 87 (the point on the water supply passage 8 away from the inlet port 2i by the predetermined distance) from the empty state of the water supply passage 8. Instead of the total reverse pulse number Nc in the reverse mode, the first predetermined time tc during which the stepping motor 82s is driven in the reverse mode may be used as the control parameter. The first predetermined time tc basically corresponds to a time period during which the water substantially fully stored in the water supply passage 8 is totally returned to the tank 4.

According to the sixth embodiment, the volume of water supplied to the water supply passage 8 is detected by the water sensor 87. In this case, when the pump 80 is driven in the normal mode, the water sensor 87 may detect the presence of water even when the total number of pulses supplied to the stepping motor 82s fails to reach the total normal pulse number Na or the drive time of the stepping motor 82s is shorter than the second predetermined time ta. In this case, it is assumed that the water supply passage 8 becomes narrower because the freezing of the inner wall surface of the water supply passage 8 is started, and thus a cross-sectional area of the water supply passage 8 has been already small. In such case, even the small volume of water is assumed to reach the height of the water sensor 87.

Therefore, the control portion 100 prioritizes the signal from the water sensor 87 than the total normal pulse number Na supplied to the stepping motor 82s or the second predetermined time ta of the stepping motor 82s. In a case where the water sensor 87 is turned on (i.e., the water sensor 87 detects the water) even when the total normal pulse number Na or the second predetermined time ta (which may include a margin) is not satisfied, the control portion 100 stops the forward rotation of the stepping motor 82s so as to stop the normal mode where the water in the tank 4 is supplied to the water supply passage 8. Afterwards, the control portion 100 drives the pump 80 in the reverse mode to thereby return the water in the water supply passage 8 to the tank 4. At this time, even the water can be sent to the water supply passage 8, it is assumed that the freezing of the inner wall surface of the tank 4 is started. Thus, the control portion 100 increases the heating value of the heating portion 40 of the tank 4 by a value ΔW so as to further increase the temperature of the water stored in the tank 4. Accordingly, when the control portion 100 drives the stepping motor 82s in the next normal mode, the water that is further heated in the tank 4 is supplied to the water supply passage 8, thereby assisting a defrosting of the water supply passage 8.

In a case where the control portion 100 drives the stepping motor 82s in the next normal mode, the water sensor 87 may detect the presence of water even when the total number of pulses supplied to the stepping motor 82s fails to reach the total normal pulse number Na or the drive time of the stepping motor 82s is shorter than the second predetermined time ta. In this case, it is assumed that the water supply passage 8 becomes narrower because of the start of the freezing of the inner wall surface of the water supply passage 8 and thus the cross-sectional area of the water supply passage 8 has been already small.

Thus, the control portion 100 prioritizes the signal from the water sensor 87 than the total normal pulse number Na supplied to the stepping motor 82s or the second predetermined time ta of the stepping motor 82s. In a case where the water sensor 87 is turned on (i.e., the water sensor 87 detects the water), the control portion 100 stops the forward rotation of the stepping motor 82s so as to stop the normal mode where the water in the tank 4 is supplied to the water supply passage 8. As a result, the water is inhibited from being supplied to the evaporating portion 2. Afterwards, immediately or when a predetermined time has elapsed, the control portion 100 drives the pump 80 in the reverse mode to thereby return the water in the water supply passage 8 to the tank 4. In this case, even the heating value of the heating portion 40 of the tank 4 increases in the previous normal mode, it is determined that the inner wall surface of the water supply passage 8 may be still frozen. Thus, the control portion 100 increases the heating value of the heating portion 40 of the tank 4 again by the value ΔW so as to further increase the temperature of the water stored in the tank 4. Accordingly, in a case where the control portion 100 drives the pump 80 in the next normal mode, the water further heated in the tank 4 is supplied to the water supply passage 8 so that the water supply passage 8 may be easily defrosted.

Accordingly, in a case where the water sensor 87 detects the presence of the water even when the total number of pulses supplied to the stepping motor 82s in the normal mode does not reach the total normal pulse number Na or the drive time of the stepping motor 82s is shorter than the second predetermined time ta, it is determined that the water supply passage 8 is frozen and thus the cross-sectional area thereof is reduced. Therefore, the control portion 100 gradually increases the heating value of the heating portion 40 of the tank 4 by the value ΔW each time so as to enhance the freeze restraining and defrosting performance. The heating value of the heating portion 40 may desirably stop increasing at a time when the heating value of the heating portion 40 becomes excessive. In a case where the control portion 100 determines that the water supply passage 8 is frozen, the control portion 100 drives the motor 82 alternately in the normal mode and the reverse mode plural times. Then, the heating value of the heating portion 40 per time unit desirably increases continuously or stepwisely (in a stepped manner) from an initial state In association with the increase of the number of times the motor 82 is driven in the normal mode. The water in the tank 4 is heated accordingly. Because the water in the tank 4 is heated in association with the increase of the number of times the motor 82 is driven in the normal mode, the freezing may be effectively eliminated.

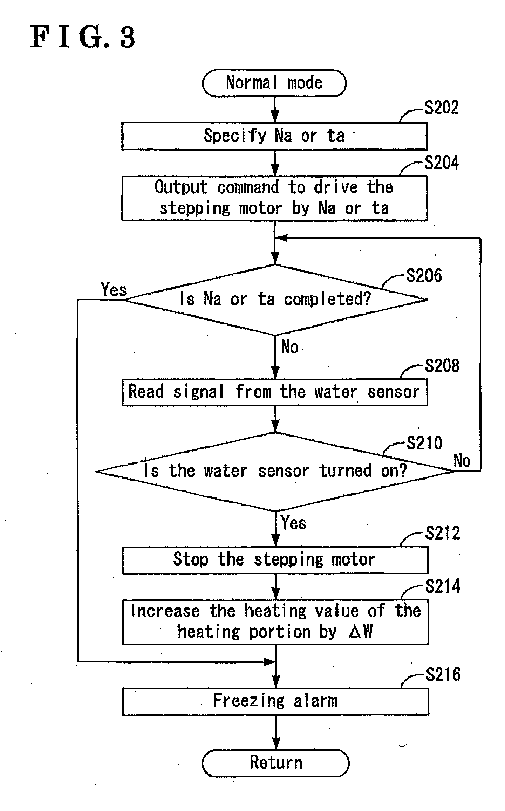

Fig. 3 illustrates an example of the normal mode performed by the CPU of the control portion 100. First, the control portion 100 specifies the total normal pulse number Na as the total number of pulses supplied to the stepping motor 82s or the second predetermined time ta as the drive time of the stepping motor 82s in the normal mode in S202. Next, the control portion 100 outputs a command to drive the stepping motor 82s by the total normal pulse number Na or the second predetermined time ta in S204. At this time, the total normal pulse number Na and the second predetermined time ta are specified so that the water flowing to the evaporating portion 2 in the water supply passage 8 reaches the height position of the water sensor 87 (i.e., the point on the water supply passage 8 away from the inlet port 2i by the predetermined distance) in a case where the stepping motor 82s rotates in the forward direction and the pump 80 is driven in the normal mode while no water is present in the water supply passage 8. Thus, in a case where the water sensor 87 detects the presence of the water so as to be turned on before the total number of pulses of the stepping motor 82s reaches the total normal pulse number Na or the drive time of the stepping motor 82s reaches the second predetermined time ta, it is determined that the inner wall surface of the water supply passage 8 is frozen and the cross-sectional area of the water supply passage 8 is reduced. Therefore, according to the sixth embodiment, whether or not the water supply passage 8 is frozen is also determined when the freeze restraining process is performed.

The control portion 100 determines whether or not the supply of the total normal pulse number Na or the elapse of the second predetermined time ta of the stepping motor 82s is completed in S206. In a case where it is completed (Yes in S206), the control portion 100 returns to the main routine. In a case where it is not complete (No in S206), the control portion 100 reads the signal from the water sensor 87 in S208. In a case where the water sensor 87 outputs ON signal (Yes in S210), it is determined that even though the water reaches the height position of the water sensor 87, the inner wall surface of the water supply passage 8 is frozen and thus the cross-sectional area of the water supply passage 8 is reduced. Thus, the control portion 100 stops the forward rotation of the stepping motor 82s to thereby finish the normal mode in S212 and increases the heating value of the heating portion 40 by the value ΔW from an initial state in S214. The control portion 100 controls an alarm 102 to output an alarm signal (i.e., to alert of the freezing) in S216 and thereafter returns to the main routine. The control portion 100 desirably increases the value ΔW in association with the decrease of the ambient temperature such as the outside air temperature. However, the control portion 100 is not limited to specify the value ΔW in the aforementioned manner.

### [Seventh embodiment]

A seventh embodiment basically includes the same configuration and effect as those of the first embodiment. Therefore, the seventh embodiment will be explained with reference to Fig. 1. In the same way as the aforementioned embodiments, according to the seventh embodiment, the water sensor 87 detects that the water supplied to the water supply passage 8 reaches the point on the water supply passage 8 away from the inlet port 2i by the predetermined distance in the normal mode. In the normal mode, the water sensor 87 may not detect the presence of water even when the total number of pulses supplied to the stepping motor 82s reaches the total normal pulse number Na or the drive time of the stepping motor 82s reaches the second predetermined time ta from the empty state (the basic state) of the water supply passage 8. In this case, it is assumed that the water leaks from the water supply passage 8 and thus the water is inhibited from reaching the height position of the water sensor 87. At this time, in a case where the water sensor 87 is turned on when the total number of pulses supplied to the stepping motor 82s reaches a value Na+ΔNx (positive value) or the drive time of the stepping motor 82s reaches a value ta+ΔTx (positive value), it is determined that the water leakage occurs at the water supply passage 8 and thus the water has difficulty in reaching the height position of the water sensor 87.

In a case where the aforementioned phenomenon sequentially occurs predetermined times CA (for example, three times), the possibility of the water leakage at the water supply passage 8 is high. Thus, the control portion 100 drives the stepping motor 82s in the reverse mode so that the water in the water supply passage 8 is fully returned to the tank 4. Thereafter, the control portion 100 stops the freeze restraining process and controls the alarm 102 to alert the water leakage at the water supply passage 8. In a case where the predetermined times CA is not satisfied, the control portion 100 continues to perform the freeze restraining process.

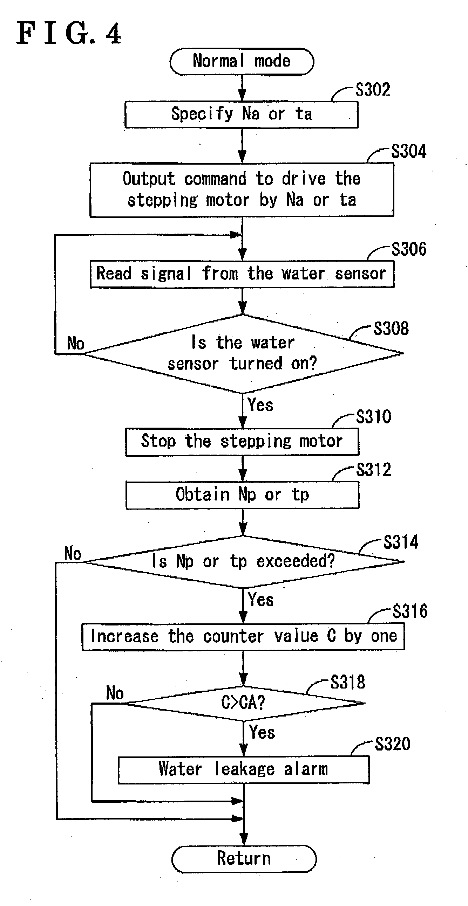

Fig. 4 illustrates an example of the normal mode performed by the CPU of the control portion 100. First, the control portion 100 specifies the total normal pulse number Na as the total number of pulses to be supplied to the stepping motor 82s or the second predetermined time ta as the drive time of the stepping motor 82s in the normal mode in S302. Next, the control portion 100 outputs a command to drive the stepping motor 82s by the total normal pulse number Na or the second predetermined time ta in S304. At this time, the total normal pulse number Na and the second predetermined time ta are specified beforehand so that the water in the water supply passage 8 reaches the height position of the water sensor 87 in a case where the stepping motor 82s rotates in the forward direction and the pump 80 is driven in the normal mode from the state where no water is present in the water supply passage 8. Accordingly, when the water sensor 87 is turned on in a state where the total number of pulses supplied to the stepping motor 82s is greater than the total normal pulse number Na by a predetermined value or more, or the drive time of the stepping motor 82s is greater than the second predetermined time ta by a predetermined value or more, it is determined that the water leakage may occur at the water supply passage 8.

Thus, while the stepping motor 82s is being driven in the normal mode, the control portion 100 reads the signal from the water sensor 87 in S306. When the water sensor 87 outputs the ON signal (Yes in S308), it is determined that the water reaches the height position of the water sensor 87 and therefore the control portion 100 stops the stepping motor 82s in S310. Next, the control portion 100 obtains a present pulse number Np from a start of the normal mode to a present time (i.e., a time when the water sensor 87 is turned on) or a present drive time tp from the start of the normal mode to the present time In S312. The control portion 100 determines whether or not the present pulse number Np up to the present time is greater than the total normal pulse number Na in the normal mode or the present drive time tp up to the present time is greater than the second predetermined time ta in S314. When the present pulse number Np is greater than the total normal pulse number Na, or the present drive time tp is longer than the second predetermined time ta for the normal mode (Yes in S314), the possibility of the water leakage at the water supply passage 8 exists. Thus, the control portion 100 increments a counter value C for the water leakage by one in S316. In a case where the counter value C exceeds a threshold value CA for the water leakage (for example, three or greater) (Yes in S318), the control portion 100 controls the alarm 102 to alert the water leakage of the water supply passage 8 in S320 and thereafter returns to the main routine. According to the seventh embodiment, the water leakage of the water supply passage 8 is determinable when the freeze restraining process is performed.

### [Eighth embodiment]

An eighth embodiment basically includes the same configuration and effect as those of the first embodiment. Therefore, the eighth embodiment will be explained with reference to Fig. 1. A pressure sensor 87p serving as the water sensor and the second sensor is provided so as to detect the presence of water at a passage portion 8m from the pressure sensor 87p to the inlet port 2i of the evaporating portion 2 in the water supply passage 8. Specifically, the pressure sensor 87p detects a water load based on the water in the passage portion 8m in the water supply passage 8. The pressure sensor 87p is provided at a portion of the water supply passage 8 extending in substantially a vertical direction so as to appropriately detect the water load. Based on a signal from the pressure sensor 87p, the volume of water at the passage portion 8m in the water supply passage 8 from the height portion of the pressure sensor 87p to the inlet port 2i of the evaporating portion 2 is detected.

For example, in a case where an output value of the pressure sensor 87p is equal to or smaller than a predetermined value (for example, 0.1 kPa), the control portion 100 determines that no water is present at an upper side of the pressure sensor 87p in the water supply passage 8. The control portion 100 then obtains a time t1 at which the output value of the pressure sensor 87p becomes greater than the aforementioned predetermined value from a lower value than the predetermined value in the normal mode. The time t1 corresponds to a time when the water reaches the same height as that of a detecting portion of the pressure sensor 87p (i.e., the point on the water supply passage 8 away from the inlet port 2i by the predetermined distance) in the water supply passage 8. Therefore, the control portion 100 controls the water in the water supply passage 8 to be fully returned to the tank 4 by driving the motor 82 and the pump 80 in the reverse mode from the time t1 for the first predetermined time tc.

### [Ninth embodiment]

A ninth embodiment basically includes the same configuration and effect as those of the first embodiment. Therefore, the ninth embodiment will be explained with reference to Fig. 1. In a state where a rotation speed of the motor 82 (the stepping motor 82s) in the normal mode is defined to be Va and a rotation speed of the motor 82 (the stepping motor 82s) in the reverse mode is defined to be Vc, a relationship Va<Vc is obtained. In this case, the water stored in the water supply passage 8 is deprived of heat by the inner wall surface of the water supply passage 8. Thus, the water in the water supply passage 8 is gradually cooled down. Accordingly, the control portion 100 controls the water in the water supply passage 8 to be immediately returned to the tank 4 to thereby increase the temperature of the water in the tank 4. The aforementioned relationship between Va and Vc may be Va=Vc, Va≈Vc, or Va>Vc.

The aforementioned first to ninth embodiments may be appropriately changed or modified. For example, the heating portion 40 is provided at the tank 4 according to the first to ninth embodiments. Alternatively, the heating portion 40 may be provided at the condensation water passage 42. The fuel cell 1 may be a polymer electrolyte fuel cell (PEFC; an operation temperature is 70 to 100 °C, for example), a phosphoric acid fuel cell (PAFC), a fuel cell having a phosphoric acid-containing electrolyte membrane, or any other types of fuel cells. That is, the fuel cell at least includes the evaporating portion where the water vapor is formed from the water so as to reform the fuel in gas phase or liquid phase by the water vapor.

According to the aforementioned embodiments, the fuel cell system includes the fuel cell 1 generating the electric power by being supplied with the anode fluid and the cathode fluid, the evaporating portion 2 evaporating the water to generate the water vapor, the reforming portion 3 forming the anode fluid by reforming the fuel by using the water vapor generated at the evaporating portion 2, the tank 4 storing the water supplied to the evaporating portion 2, the heating portion 40 heating the water supplied to the tank 4 or stored in the tank 4, the water supply passage 8 connecting the tank 4 and the evaporating portion 2 and allowing the water in the tank 4 to be supplied to the evaporating portion 2, the pump (the water supply source) 80 provided at the water supply passage 8 and transmitting the water in the tank 4 to the evaporating portion 2, and the control portion 100 controlling the pump 80. In a case where the temperature detected by the temperature sensor 57 is greater than the first threshold value T1, the control portion 100 drives the pump 80 in the reverse mode to thereby reduce or eliminate the water in the water supply passage 8 and to return the water to the tank 4. In addition, in a case where the temperature detected by the temperature sensor 57 is equal to or smaller than the second threshold value T2 (T2<T1), the control portion 100 determines the possibility of the freezing. Thus, the control portion 100 drives the pump 80 in the normal mode and the reverse mode alternately so that the water in the tank 4 flows in the water supply passage 8 in the reciprocating manner. That is, the control portion 100 desirably performs the freeze restraining process to thereby restrain the freezing of the water supply passage 8. Further, the fuel cell system desirably includes the water sensor 87 (the pressure sensor 87p) detecting the presence of water at the passage portion 8x from the evaporating portion 2 to the pump 80 (at the passage portion 8m from the pressure sensor 87p to the evaporating portion 2) In the water supply passage 8. In this case, the control portion 100 desirably controls the pump 80 to be switchable between the normal mode and the reverse mode based on the signal from the water sensor 87 (87p).
A fuel cell system includes a fuel cell (1), an evaporating portion (2), a reforming portion (3), a tank (4), a heating portion (40), a water supply passage (8), a water supply source (80) being switchable between a normal mode in which water in the tank is sent to the evaporating portion by a first rotation, and a reverse mode in which the water in the water supply passage is returned to the tank by a second rotation, and a control portion (100) performing a freeze restraining process by controlling the water supply source to alternately operate in the normal mode and the reverse mode in a case where the control portion determines a possibility of a freezing or a start of the freezing of at least one of the water supply passage and the water supply source.

## Claims

1. A fuel cell system comprising
a fuel cell (**1**) generating an electric power by being supplied with an anode fluid and a cathode fluid;
an evaporating portion (**2**) evaporating water to generate a water vapor and including an inlet port (**2i**);
a reforming portion (**3**) forming the anode fluid by reforming a fuel by using the water vapor generated at the evaporating portion (**2**);
a tank (**4**) storing the water supplied to the evaporating portion (**2**); a heating portion (**40**) heating the water supplied to the tank (**4**) or stored in the tank (**4**);
a water supply passage (**8**) connecting the tank (**4**) and the evaporating portion (**2**) and allowing the water in the tank (**4**) to be supplied to the evaporating portion (**2**);
a water supply source (**80**) provided at the water supply passage (**8**) and being switchable between a normal mode in which the water in the tank (**4**) is sent to the inlet port (**2i**) of the evaporating portion (**2**) by a first rotation where the water supply source (**80**) rotates in a predetermined direction, and a reverse mode in which the water in the water supply passage (**8**) is returned to the tank (**4**) by a second rotation where the water supply source (**80**) rotates In a direction different from the predetermined direction; and
a control portion (**100**) controlling the water supply source (**80**),
**characterized in that**
the control portion (**100**) controls the water supply source (**80**) to be switched to the reverse mode so as to return the water in the water supply passage (**8**) to the tank (**4**) before a power generating operation is stopped, the control portion (**100**) performing a freeze restraining process by controlling the water supply source (**80**) to alternately operate in the normal mode and the reverse mode in a case where the control portion (**100**) determines a possibility of a freezing or a start of the freezing of at least one of the water supply passage (**8**) and the water supply source (**80**).

2. The fuel cell system according to claim 1, wherein the control portion (**100**) performs a return process returning the water in the water supply passage (**8**) to the tank (**4**) so that the water is eliminated from the water supply passage (**8**) by driving the water supply source (**80**) in the reverse mode at a start of the freeze restraining process.

3. The fuel cell system according to either claim 1 or 2, further comprising a first sensor (**57**) detecting an ambient temperature of the fuel cell system, wherein the control portion (**100**) drives the water supply source (**80**) in the reverse mode to reduce or eliminate the water in the water supply passage (**8**) and to return the water to the tank (**4**) in a case where a temperature detected by the first sensor (**57**) is equal to or smaller than a first threshold value **(T1**), and wherein the control portion (**100**) determines the possibility of the freezing and performs the freeze restraining process in a case where the temperature detected by the first sensor (**57**) is equal to or smaller than a second threshold value (**T2**) being different from the first threshold value (**T1**).

4. The fuel cell system according to claim 3, wherein the first threshold value **(T1)** is equal to or smaller than 5[deg.]C and the second threshold value (**T2**) is smaller than the first threshold value (**T1**).

5. The fuel cell system according to any one of claims 1 through 4, further comprising a second sensor (**87, 87p**) detecting a presence of water in a passage portion (**8x, 8m**) arranged between the evaporating portion (**2**) and the water supply source (**80**) in the water supply passage (**8**), wherein the control portion (**100**) controls the water supply source (**80**) to stop operating in the normal mode based on a signal from the second sensor (**87, 87p**) in the freeze restraining process.

6. The fuel cell system according to any one of claims 1 through 5, wherein the control portion (**100**) drives the water supply source (**80**) alternately and repeatedly in the normal mode and the reverse mode and continuously or stepwisely increases a heating value of the heating portion (**40**) per time unit in association with the number of times the normal mode is performed in a case where the control portion (**100**) determines the freezing of the water supply passage (**8**).

## Patentansprüche

1. Brennstoffzellensystem, mit
einer Brennstoffzelle (**1**), die elektrische Energie durch Zufuhr eines Anodenfluids und eines Kathodenfluids erzeugt;
einem Verdampfungsabschnitt (**2**), der Wasser verdampft, um Wasserdampf zu erzeugen, und einen Einlassanschluss (**2i**) umfasst;
einem Reformierabschnitt (**3**), der das Anodenfluid durch Reformieren von Brennstoff durch Verwenden des an dem Verdampfungsabschnitt (**2**) erzeugten Wasserdampfs bildet;
einem Tank (**4**), der das dem Verdampfungsabschnitt (**2**) zugeführte Wasser speichert;
einem Heizabschnitt (**40**), der das dem Tank (**4**) zugeführte oder im Tank (**4**) gespeicherte Wasser aufheizt;
einer Wasserzufuhrpassage (**8**), die den Tank (**4**) und den Verdampfungsabschnitt (**2**) verbindet und dem Wasser im Tank (**4**) ermöglicht, dem Verdampfungsabschnitt (**2**) zugeführt zu werden;
einer Wasserzufuhrquelle (**80**), die an der Wasserzufuhrpassage (**8**) bereitgestellt ist, und die zwischen einem normalen Modus, in dem das Wasser im Tank (**4**) zum Einlassanschluss (**2i**) des Verdampfungsabschnitts (**2**) durch eine erste Drehung, bei der sich die Wasserzufuhrquelle (**80**) in einer vorbestimmten Richtung dreht, gefördert wird, und einem Umkehrmodus, in dem das Wasser in der Wasserzufuhrpassage (**8**) zum Tank (**4**) durch eine zweite Drehung zurückgeführt wird, wobei sich die Wasserzufuhrquelle (**80**) in einer sich von der vorbestimmten Richtung unterscheidenden Richtung dreht, umschaltbar ist; und
einem Steuerabschnitt (**100**), der die Wasserzufuhrquelle (**80**) steuert,
**dadurch gekennzeichnet, dass**
der Steuerabschnitt (**100**) die Wasserzufuhrquelle (**80**) steuert, um in den Umkehrmodus zum Zurückführen des Wassers in der Wasserzufuhrpassage (**8**) zum Tank (**4**) umgeschaltet zu werden, bevor eine Energieerzeugungsoperation gestoppt wird, wobei der Steuerabschnitt (**100**) einen Gefrierhemmungsprozess durch Steuern der Wasserzufuhrquelle (**80**), um abwechselnd im normalen Modus und im Umkehrmodus zu arbeiten, in einem Fall durchführt, in dem der Steuerabschnitt (**100**) eine Möglichkeit eines Gefrierens oder einen Start des Gefrierens der Wasserzufuhrpassage (**8**) und/oder der Wasserzufuhrquelle (**80**) bestimmt.

2. Brennstoffzellensystem gemäß Anspruch 1, wobei der Steuerabschnitt (**100**) einen Zurückführungsprozess zum Zurückführen des Wassers in der Wasserzufuhrpassage (**8**) zum Tank (**4**) durchführt, sodass das Wasser aus der Wasserzufuhrpassage (**8**) durch Antreiben der Wasserzufuhrquelle (**80**) im Umkehrmodus bei einem Start des Gefrierhemmungsprozesses entfernt wird.

3. Brennstoffzellensystem gemäß Anspruch 1 oder 2, weiterhin mit einem ersten Sensor (**57**), der eine Umgebungstemperatur des Brennstoffzellensystems erfasst, wobei der Steuerabschnitt (**100**) die Wasserzufuhrquelle (**80**) im Umkehrmodus antreibt, um das Wasser in der Wasserzufuhrpassage (**8**) zu reduzieren oder zu entfernen, und das Wasser zu dem Tank (**4**) zurückzuführen, in einem Fall, in dem eine durch den ersten Sensor (**57**) erfasste Temperatur kleiner oder gleich einem ersten Schwellenwert (**T1**) ist, und wobei der Steuerabschnitt (**100**) die Möglichkeit des Gefrierens bestimmt und den Gefrierhemmungsprozess in einem Fall durchführt, in dem die durch den ersten Temperatursensor (**57**) erfasste Temperatur kleiner oder gleich einem zweiten Schwellenwert (**T2**) ist, der sich von dem ersten Schwellenwert **(T1)** unterscheidet.

4. Brennstoffzellensystem gemäß Anspruch 3, wobei der erste Schwellenwert (**T1**) kleiner oder gleich 5 [Grad] C ist, und der zweite Schwellenwert (**T2**) kleiner als der erste Schwellenwert (**T1**) ist.

5. Brennstoffzellensystem gemäß einem der Ansprüche 1 bis 4, weiterhin mit einem zweiten Sensor (**87, 87p**), der ein Vorhandensein von Wasser in einem Passagenabschnitt (**8x, 8m**), der zwischen dem Verdampfungsabschnitt (**2**) und der Wasserzufuhrquelle (**80**) in der Wasserzufuhrpassage (**8**) angeordnet ist, erfasst, wobei der Steuerabschnitt (**100**) die Wasserzufuhrquelle (**80**) steuert, um eine Operation im normalen Modus basierend auf einem Signal vom zweiten Sensor (**87, 87p**) im Gefrierhemmungsprozess zu stoppen.

6. Brennstoffzellensystem gemäß einem der Ansprüche 1 bis 5, wobei der Steuerabschnitt (**100**) die Wasserzufuhrquelle (**80**) abwechselnd und wiederholt im normalen Modus und imm Umkehrmodus antreibt, und kontinuierlich oder schrittweise einen Heizwert des Heizabschnitts (**40**) pro Zeiteinheit in Verbindung mit der Anzahl von Malen, zu denen der normale Modus durchgeführt wird, in einem Fall erhöht, in dem der Steuerabschnitt (**100**) das Gefrieren der Wasserzufuhrpassage (**8**) bestimmt.

## Revendications

1. Système de pile à combustible comprenant
une pile à combustible (1) générant de l'énergie électrique en étant alimentée avec un fluide d'anode et un fluide de cathode ;
une partie d'évaporation (2) faisant évaporer de l'eau pour générer une vapeur d'eau et comportant un orifice d'entrée (2i) ;
une partie de reformage (3) formant le fluide d'anode par reformage d'un combustible en utilisant la vapeur d'eau générée au niveau de la partie d'évaporation (2) ;
un réservoir (4) stockant l'eau alimentée à la partie d'évaporation (2) ;
une partie de chauffage (40) chauffant l'eau alimentée au réservoir (4) ou stockée dans le réservoir (4) ;
un passage d'alimentation en eau (8) reliant le réservoir (4) et la partie d'évaporation (2) et permettant l'alimentation de la partie d'évaporation (2) en l'eau dans le réservoir (4) ;
une source d'alimentation en eau (80) prévue au niveau du passage d'alimentation en eau (8) et étant commutable entre un mode normal dans lequel l'eau dans le réservoir (4) est envoyée vers l'orifice d'entrée (2i) de la partie d'évaporation (2) par une première rotation où la source d'alimentation en eau (80) tourne dans une direction prédéterminée, et un mode inverse dans lequel l'eau dans le passage d'alimentation en eau (8) est renvoyée vers le réservoir (4) par une deuxième rotation où la source d'alimentation en eau (80) tourne dans une direction différente de la direction prédéterminée ; et
une partie de commande (100) commandant la source d'alimentation en eau (80),
**caractérisé en ce que**
la partie de commande (100) commande la source d'alimentation en eau (80) pour être commutée vers le mode inverse afin de renvoyer l'eau dans le passage d'alimentation en eau (8) vers le réservoir (4) avant l'arrêt d'une opération de génération d'énergie,
la partie de commande (100) effectuant un processus empêchant la congélation en commandant la source d'alimentation en eau (80) pour fonctionner en alternance dans le mode normal et le mode inverse dans un cas où la partie de commande (100) détermine une possibilité d'une congélation ou d'un début de la congélation d'au moins l'un(e) du passage d'alimentation en eau (8) et de la source d'alimentation en eau (80).

2. Système de pile à combustible selon la revendication 1, dans lequel la partie de commande (100) effectue un processus de retour renvoyant l'eau dans le passage d'alimentation en eau (8) vers le réservoir (4) de sorte que l'eau soit éliminée du passage d'alimentation en eau (8) par entraînement de la source d'alimentation en eau (80) dans le mode inverse au début du processus empêchant la congélation.

3. Système de pile à combustible selon la revendication 1 ou 2, comprenant en outre un premier capteur (57) détectant une température ambiante du système de pile à combustible, dans lequel la partie de commande (100) entraîne la source d'alimentation en eau (80) dans le mode inverse afin de réduire ou d'éliminer l'eau dans le passage d'alimentation en eau (8) et de renvoyer l'eau vers le réservoir (4) dans le cas où une température détectée par le premier capteur (57) est inférieure ou égale à une première valeur seuil (T1), et dans lequel la partie de commande (100) détermine la possibilité de la congélation et effectue le processus empêchant la congélation dans un cas où la température détectée par le premier capteur (57) est inférieure ou égale à une deuxième valeur seuil (T2) étant différente de la première valeur seuil (T1).

4. Système de pile à combustible selon la revendication 3, dans lequel la première valeur seuil (T1) est inférieure ou égale à 5[deg.]C et la deuxième valeur seuil (T2) est inférieure à la première valeur seuil (T1).

5. Système de pile à combustible selon l'une quelconque des revendications 1 à 4, comprenant en outre un deuxième capteur (87, 87p) détectant une présence d'eau dans une partie de passage (8x, 8m) agencée entre la partie d'évaporation (2) et la source d'alimentation en eau (80) dans le passage d'alimentation en eau (8), où la partie de commande (100) commande la source d'alimentation en eau (80) pour arrêter le fonctionnement dans le mode normal sur la base d'un signal provenant du deuxième capteur (87, 87p) dans le processus empêchant la congélation.

6. Système de pile à combustible selon l'une quelconque des revendications 1 à 5, dans lequel la partie de commande (100) entraîne la source d'alimentation en eau (80) en alternance et de façon répétée dans le mode normal et le mode inverse et augmente de manière continue ou graduelle une valeur de chauffage de la partie de chauffage (40) par unité de temps en association avec le nombre de fois où le mode normal est effectué dans un cas où la partie de commande (100) détermine la congélation du passage d'alimentation en eau (8).
